# EUROPEAN PATENT APPLICATION

(11) **EP 4 568 255 A1**
(43) Date of publication of application: **11.06.2025**
(21) Application number: 23214278.6
(22) Date of filing: 05.12.2023
(51) Int. Cl.: H04N 21/234, H04H 60/59, H04L 65/75, H04N 19/46, H04N 21/2343, H04N 21/235, H04N 21/44, H04N 21/4725, H04N 21/845, H04N 21/858

(54) **ENCODING AND DECODING OF VIDEO INCLUDING A PLURALITY OF TOGGLEABLE OVERLAYS**

(71) Applicant: Axis AB, 223 69 Lund (SE)
(72) Inventor: Hassbring, Ludvig, 223 69 LUND (SE); Jendbro, Magnus, 223 69 LUND (SE); Sjökvist, Marcus, 223 69 LUND (SE); Yuan, Song, 223 69 LUND (SE)
(74) Representative: AWA Sweden AB

(57) **Abstract**

The present disclosure relates to encoding and decoding methods for toggleable overlays in a video. An encoding method comprises receiving (S702) a plurality of image frames; determining (S704) one or more overlay image frames each comprising a plurality of toggleable overlays, each toggleable overlay being associated with an identifier. An image frame is associated (S706) with an overlay image frame of the one or more overlay image frames. Metadata is added (S708) to a header of the image frame, wherein the metadata comprises, for each toggleable overlay of the plurality of toggleable overlays: position data identifying a position of the toggleable overlay in the overlay image frame, size data identifying a size of the toggleable overlay in the overlay image frame, and identification data corresponding to the identifier of the toggleable overlay.

## Description

### Technical Field

The present invention relates to video overlays, and in particular to encoding and decoding methods for toggleable overlays in a video.

### Background

Overlays on video is a feature used to add a layer of content, such as text, graphics, or another video, on top of the primary footage. There are several types of overlays, each serving a specific purpose. Text overlays, for instance, include titles, subtitles, and any textual information overlaid on the video, often used for captions or storytelling. Graphic overlays range from simple shapes to intricate illustrations, enhancing the visual appeal or highlighting key information. In some instances, the above mentioned examples of overlays may be collectively referred to as graphical overlays.

Overlays are not just diverse in form but also in application across various fields. In broadcasting, for example, they may be used for displaying logos, news tickers, or sports scores, while in marketing and advertising, overlays can make promotional videos more engaging with branding elements or calls to action. In monitoring systems, overlays may be a key feature that enhance effectiveness and functionality. For example, an overlay can display information such as time stamps and camera locations directly on the footage. Such added layer of data may be used for contextualizing the video, making it easier to pinpoint when and where specific events occurred. Other examples of overlays in a monitoring application include privacy masks or bounding boxes.

Toggleable overlays in video content represent a cutting-edge approach to viewer interaction, allowing users to engage with additional layers of information or graphics according to their preference. This innovative feature, however, introduces some technical challenges, particularly regarding bandwidth and streaming quality, as well as content synchronization.

One of the primary concerns with toggleable overlays is their impact on bandwidth and streaming quality. Typically, these overlays require the transmission of extra data alongside the main video stream, in particular when the video may be overlayed with overlays in different configurations and combinations. This additional data burden can strain bandwidth, potentially affecting the streaming quality. Moreover, ensuring seamless content synchronization may pose another significant challenge. Overlays, especially those that are interactive or provide supplementary information, need to be perfectly in sync with the video content. Synchronization may be vital to maintain continuity and relevance. Achieving this level of synchronization can be technically demanding, especially when factoring in the diverse range of devices used by viewers.

There is thus a need for improvements in this context.

### Summary

In view of the above, solving or at least reducing one or several of the drawbacks discussed above would be beneficial, as set forth in the attached independent patent claims.

According to a first aspect of the present invention, there is provided method of encoding one or more video streams, the method comprising the steps of: receiving a plurality of image frames; and determining one or more overlay image frames, each overlay image frame comprising a plurality of toggleable overlays, each toggleable overlay being associated with an identifier, wherein the overlay image frame having a same size as an image frame of the plurality of image frames.

The method further comprises, for each image frame among at least some of the plurality of image frames: associating the image frame with an overlay image frame of the one or more overlay image frames; and adding metadata to a header of the image frame, wherein the metadata comprises, for each toggleable overlay of the plurality of toggleable overlays: position data identifying a position of the toggleable overlay in the overlay image frame, size data identifying a size of the toggleable overlay in the overlay image frame, and identification data corresponding to the identifier of the toggleable overlay;

The method further comprises encoding the one or more video stream, wherein the encoding comprises: encoding the plurality of image frames into a first plurality of encoded image frames using a first group of picture, GOP, structure; and encoding the one or more overlay image frames.

An overlay image frame may be determined from various information sources. For example, monitoring systems may benefit from the integration of analytics metadata, which can be used to determine the most relevant overlays for a given situation. This metadata may encompass details like the classification, position, and quantity of objects in the plurality of image frames. By analysing this metadata, the system can intelligently decide what types of overlays are most appropriate to include in the overlay image frames. An overlay image frame may further be determined by incorporating status information from a camera capturing the plurality of image frames, or from other sensors, such as door sensors indicating open or closed states. Such an approach may allow for the overlay image frame to comprise specific icons or text based on the real-time status of various sensors, offering a more dynamic and responsive way of determining the one or more overlay image frames.

An overlay in an overlay image frame may be visualized in different ways. For example, the information (e.g., video analytics metadata, sensor information, etc.) may be rendered into text as text overlays or be rendered into line graphics or other types of graphics.

In some instances, an overlay may be determined by being converted from image files such as a JPEG, GIF, PNG etc, further enhancing the utility of the encoding method.

At least some of the image frames among the one or more image frames are associated with an overlay image frame. For example, not all image frames may have relevant overlays to be visualized on a decoder side, e.g., depending on a lack of analytics metadata for the image content of these image frames. In other examples, only image frames later encoded as delta frames may be associated with an overlay image frame, as discussed below.

For each image frame being associated with an overlay image frame, metadata representing the plurality of toggleable overlays in the overlay image frame is added to a header of the image frame. Advantageously, this may allow for streamlined decoding, synchronized presentation, resource optimization, improved error handling, etc.

For example, by including overlay information in the frame header, decoders can more efficiently process and render the overlay. Such organization of data may ensure that the overlays are accurately and promptly displayed, enhancing the overall viewing experience. By including the identification data in the header, identification of position and size in the associated overlay image frame of the overlays to toggle on or off at the decoder side may be simplified, thereby providing a low complexity way of identifying image data of the relevant overlays in the overlay image frame.

Moreover, embedding overlay details in the frame header may ensure that the overlay is perfectly synchronized with the corresponding frame. This may be crucial for maintaining continuity, especially in videos where timing and precision are critical, such as in monitoring footage or live broadcasts.

Furthermore, integrating overlay information into the frame header may reduce the processing overhead compared to including such information in a separate data container in the encoded video streams. Including a plurality of toggleable overlays in one overlay image frame may reduce the complexity of including the overlays in the one or more video stream, compared to including them in separate overlay image frames.

Moreover, error handling may be improved since the built in error handling at a decoder side when receiving a corrupt encoded image frame can be used if a discrepancy or corruption in the overlay data in the header is detected.

Encoding may be performed of the plurality of image frames and the one or more overlay frames into one or more video streams (bitstreams) according to a video coding format and/or standard such as, e.g., H.261, H.262, H.263, H.264/AVC, H.265/HEVC, VP8, VP9, or AV1.

In some examples, the encoding comprises using a block-based codec supporting skip-blocks, wherein the encoded image frames and the encoded overlay frames are included in a first video stream, wherein the method further comprises setting each image frame of the plurality of image frames as a no-display frame; wherein the encoding comprises, for each delta-encoded image frame of the first plurality of encoded image frames: determining an overlay image frame among the one or more overlay image frames; setting the overlay image frame as a display frame; delta-frame encoding the overlay image frame into an encoded overlay frame referencing the delta-encoded image frame, wherein each pixel block of the encoded overlay frame not corresponding to any of the plurality of toggleable overlays is set as a skip-block; and including the encoded overlay frame in the first video stream as auxiliary data associated with the delta-encoded image frame.

Determining an overlay frame among the one or more overlay image frames comprises using the overlay image frame associated to the image frame that is encoded into the delta-encoded image frame.

In this method, the encoded overlay frame (i.e., the macroblocks of pixels encoded from the overlay image frame) may for example be encoded as additional macroblocks included in the same "image container" as the encoded image frame. All image data of the image container is thus encoded as delta encoded frame (B or P frame). The header of the image container indicates to a decoder which part of the encoded image content in the image container that relates to the image frame. The header may thus include information to distinguish which parts of the encoded content relate to the image frame and which to the overlay image frame. This information could comprise an identifier or a flag indicating the start and end of the overlay image frame and/or the image frame within the container. The header may further comprise reference frame data, identifying for both the encoded image frame and the encoded overlay image frame, details about the reference frames used for encoding the differences.

The use of an image container to transmit both image data and overlays, particularly when overlays are encoded as extra macroblocks, may offer a streamlined and efficient approach to video content management. An image container, essentially a digital file format according to a used file format (e.g., MP4, MOV, MKV, or any other suitable format) encapsulates various data types, the primary video, and the overlay data, into a unified structure. This not only simplifies handling and management but also may ease the complexity of transmitting multiple data types. By including the encoded overlay image frames as additional macroblocks within the same container as the (main) image frame, the overlay image frame is integrated directly into the video stream, but as a distinct component that can be independently recognized (e.g., through information in the header) and processed.

One advantage of this method is the facilitation of easier synchronization between video content and overlays. Since both types of data are housed within the same container, they are inherently synchronized. This reduces the risk of timing mismatches during playback, ensuring that overlays appear at the correct moment relative to the video frames. It also simplifies the decoding process, as the decoder can simultaneously process both the video and overlay data in a coordinated manner.

Moreover, using an image container aligns with standard transmission protocols, enhancing compatibility with various distribution networks and playback devices. This standardization facilitates broad accessibility and ease of integration into existing video distribution infrastructures. Consequently, video content, along with its overlays, can be transmitted over common networks and as described further below, viewed on legacy devices.

By encoding the overlay image in such a way, e.g., by delta-frame encoding the overlay image frame (having a same size as the associated image frame) into an encoded overlay frame referencing the delta-encoded image frame and where pixel blocks of the encoded overlay frame not corresponding to any of the plurality of toggleable overlays is set as a skip-block, advantageously, a legacy decoding client may be able to decode the video stream with all overlays visible by just decode the delta-encoded overlay image frame and display it, i.e., without using the information provided in the header or including functionality for individually toggle the overlays on or off.

In video coding, using skip-blocks is a technique used to increase encoding efficiency, particularly in sequences where parts of the video frame remain unchanged over several frames. When a pixel block does not change significantly from one frame to the next, it is marked as a 'skip-block'. Instead of re-encoding this unaltered block for each subsequent frame, the encoder simply references the block from a previous frame, indicating that it should be 'skipped' or copied over as-is. This technique may be used in the context of encoding of an overlay image frame referencing an encoded image frame, since the pixel blocks between the overlays in the overlay image frame does not comprise any content in the overlay image frame and thus can be skipped, meaning that the corresponding pixel blocks in the referenced image frame will be shown instead.

In some embodiments, the first plurality of encoded image frames are included in a first video stream and the encoded one or more overlay frames are included in a second video stream, wherein the step of associating the image frame with an overlay image frame of the one or more overlay image frames comprises: including first synchronization data in the first video stream to associate the image frame with an overlay image frame of the one or more overlay image frames.

Such synchronization data may for example comprise an indication of an index of the overlay image frame among the one or more overlay frames that is associated with a particular image frame. In some cases, the synchronization data comprises a table mapping the index of the image frame to the index of the associated overlay image frame.

By encoding the image frames and the overlay image frames in different video streams, an increased flexibility may be achieved, both on an encoder side and on a decoder side. For example, the step of encoding one or more overlay image frames may comprise using a second GOP structure different from the first GOP structure. Moreover, the overlay image frames, as encoded in the second video stream, may be associated with other encoded video stream(s), and thus possibly reduce the required bit rate for supplementing the plurality of encoded video streams with overlays.

Accordingly, in some embodiments, the method may further comprise the steps of: encoding the plurality of image frames into a second plurality of encoded image frames using a third GOP structure; including the second plurality of encoded image frames in a third video stream; and including the synchronization data in the third video stream. Advantageously, the present embodiment scales well with additional encodings of the plurality of image frames. Consequently, in some embodiments, the plurality of image frames may be encoded into even further video stream(s), i.e., a fourth, fifth, etc.

In some embodiments, the encoding of the plurality of image frames into the first plurality of encoded image frames differs from the encoding of the plurality of image frames into the second plurality of encoded image frames in at least one of: encoding quality, frame rate, GOP structure (i.e., the first GOP structure differs from the third GOP structure), codec, or resolution. Advantageously, the present embodiment allows for an increased flexibility in the applied encoding method or properties thereof, to e.g., facilitate for different client functionality.

In some examples, the step of encoding one or more overlay image frames comprises using a scalable video coding, SVC, codec. SVC allows conveyance of information structured in a hierarchical manner to allow portions of the bitstream to be extracted at lower bit rate than the complete sequence to enable decoding of pictures with multiple image structures (for sequences encoded with spatial scalability), pictures at multiple picture rates (for sequences encoded with temporal scalability), and/or pictures with multiple levels of image quality (for sequences encoded with quality scalability, such as signal to noise, SNR). Consequently, overlay image frames as encoded in the second video stream may be decoded considering different configurations of the first and third video streams, such that the overlay image frames may be decoded in a configuration matching the configuration of the coding of the relevant video stream.

According to a second aspect of the invention, the above object is achieved by a system for encoding one or more video streams, the system comprising: one or more processors; and one or more non-transitory computer-readable media storing instructions executable by the one or more processors, wherein the instructions, when executed, cause the system to perform operations comprising: receiving a plurality of image frames; determining one or more overlay image frames, each overlay image frame comprising a plurality of toggleable overlays, each toggleable overlay being associated with an identifier, wherein the overlay image frame having a same size as an image frame of the plurality of image frames; for each image frame among at least some of the plurality of image frames: associating the image frame with an overlay image frame of the one or more overlay image frames; adding metadata to a header of image frame, wherein the metadata comprises, for each toggleable overlay of the plurality of toggleable overlays: position data identifying a position of the toggleable overlay in the overlay image frame, size data identifying a size of the toggleable overlay in the overlay image frame, and identification data corresponding to the identifier of the toggleable overlay; encoding the one or more video stream, wherein the encoding comprises: encoding the plurality of image frames into a first plurality of encoded image frames using a first group of picture, GOP, structure; encoding the one or more overlay image frames.

According to a third aspect of the invention, the above object is achieved by a non-transitory computer-readable storage medium having stored thereon instructions for implementing the method according to the first aspect when executed on a device having processing capabilities.

The second and third aspects may generally have the same features and advantages as the first aspect.

According to a fourth aspect of the invention, the above object is achieved by a method of decoding a video stream, the method comprising the steps of: receiving one or more encoded overlay image frames, each encoded overlay image frame comprising a plurality of toggleable overlays, each toggleable overlay being associated with an identifier; receiving a plurality of encoded image frames in a first encoded video stream; receiving first metadata indicating identifiers of one or more of the plurality of toggleable overlays to be visible in the decoded video stream; decoding the plurality of encoded image frames into a first plurality of image frames using a GOP structure; and decoding the one or more encoded overlay image frames into one or more overlay image frames, wherein each overlay image frame having a same size as an image frame of the first plurality of image frames;

The method further comprises, upon determining that an image frame of the first plurality of image frames is associated with an overlay frame of the one or more overlay image frames: extracting second metadata from the header of the image frame, the second metadata comprises, for each toggleable overlay of the plurality of toggleable overlays: position data identifying a position of the toggleable overlay in the overlay frame, size data identifying a size of the toggleable overlay in the overlay frame, and identification data corresponding to an identifier of the toggleable overlay; upon the first metadata comprising an identifier of a toggleable overlay of the plurality of overlays, determining an image frame with overlays by including image data from the image frame and image data from overlay frame corresponding to the toggleable overlay using the position data and size data from the first metadata, and including the image frame with overlays in the decoded video stream.

Advantageously, depending on which overlays that are indicated to be toggled on in the first metadata, the decoder implementing the method may determine an image frame with these overlays visible using second metadata from the header of the currently decoded image frame. The first metadata may for example be received from a user of a client (e.g., smart phone, computer, TV, tablet, etc) on which the decoded video stream is displayed. The first metadata may in other embodiments be received from a content provider or other separate entity (separate from the user of the display showing the decoded video stream), controlling which overlay(s) that should be visible. For instance, the first metadata could be managed by a monitoring system operator who switches overlays on or off across multiple displays, depending on factors like the content within the encoded image frames, security clearance of the users of the displays, etc.

By receiving the second metadata (identifying size and position of the respective toggleable overlays) in the header, a low complexity method of determining which overlays to be included in the image frame with overlays may be achieved as discussed above and identifying which image data that should be combined with the visible overlays to form the image frame with overlays.

In some examples, the step of receiving one or more encoded overlay image frames comprises: receiving a plurality of delta-encoded overlay frames, each delta-encoded overlay frame associated with an encoded image frame of the plurality of encoded image frames, wherein each pixel block of the delta-encoded overlay frames not comprising image data of any of the plurality of toggleable overlays is set as a skip-block;

The step of determining an image frame with overlays comprises delta-frame decoding an overlay image frame associated with the image frame using the image frame as reference; wherein the delta-frame decoding comprises, upon the overlay data not comprising an identifier of a toggleable overlay of the plurality of overlays, setting pixel blocks corresponding to the toggleable graphical overlay as skip-blocks using the position data and size data from the second metadata; wherein the image frame with overlays is a display frame.

Furthermore, each delta-encoded overlay image frame is included as auxiliary data in the first encoded video stream each image frame of the plurality of image frames is a no-display frame.

A standard decoder may not forward or transmit image frames designated, marked, or tagged as no-display image frames to an output video stream for instance for display, analytics or for storage. Conversely, the standard decoder may forward or transmit image frames designated, marked, or tagged as display image frames to an output video stream for instance for display, analytics or for storage. Using the ND flag (as defined in video coding standards such as H.265, H.266/VVC, EVC, and AV1) may thus facilitate that standard functionality of the decoder can be used. Since the image frames decoded from the encoded video stream are ND frames, and image frames with overlays are display frames, a decoded video stream including the overlays may be achieved. Due to the encoding strategy, wherein the overlay image frame is encoded as a delta-frame referencing the associated image frame, the decoded video stream may include image data from the image frame supplemented with the overlays from the overlay image frame. Using the skip-block functionality, only the relevant overlay(s) (e.g., as indicated in the first metadata) will be visible in the decoded video stream, wherein the remaining image data in the decoded video stream will be taken from the decoded image frames.

Typically, an image frame in a video is divided into macroblocks, which are the basic units processed during video compression and encoding. In this method, instead of integrating the plurality of overlays (such as text, graphics, or secondary images) directly into the image frame itself, they may be encoded as additional macroblocks (auxiliary data) in the same image container as the image data of the image frame.

This means that the overlay data is treated separately from the main content of the image frame. By encoding the overlay image frame as further macroblocks in the same image container as the image frame, the overlay image frame can be processed independently while still being associated with the corresponding image frame. As described above, using this technique, synchronization and simultaneous processing of the overlay image frame and the associated image frame are facilitated.

In some examples, the one or more encoded overlay image frames are received in a second encoded video stream different from the first encoded video stream, wherein the first encoded video stream comprises synchronization data indicating association of each overlay image frame of the one or more overlay image frames with an image frame of the first plurality of image frames.

As described above, using two different video streams the encoded overlay image frames and the encoded image frames (encoded video), an increased flexibility may be achieved when it comes to encoding and decoding functionality and processes. For example, less processing power might be required for the overlay stream (second video stream) if it is simpler or changes less frequently than the main video (first video stream). Such separation may thus allow the decoder to optimize processing based on the complexity of each stream.

In some examples, the step of determining an image frame with overlays comprises: extracting first image data from overlay frame corresponding to the toggleable overlay; identifying second image data in the image frame to be replaced by the first image data using the position data and size data from the second metadata; and determining the image frame with overlays by replacing the second pixel blocks with the first pixel blocks in the image frame.

Advantageously, the decoder may efficiently combine the separate video and overlay streams into a single, composite output. This method allows for dynamic manipulation of overlays, they can be toggled on or off, without altering the underlying main video content. It provides a flexible and low complexity approach to video rendering, using the header of the image frames for identifying the relevant overlay image data from the overlay image frame, especially useful in scenarios where overlays may be frequently toggled on or off.

According to a fifth aspect of the invention, the above object is achieved by a system decoding a video stream, the system comprising: one or more processors; and one or more non-transitory computer-readable media storing instructions executable by the one or more processors, wherein the instructions, when executed, cause the system to perform operations comprising: receiving one or more encoded overlay image frames, each encoded overlay image frame comprising the plurality of toggleable overlays, each toggleable overlay being associated with an identifier; receiving a plurality of encoded image frames in a first encoded video stream; receiving first metadata indicating identifiers of one or more of the plurality of toggleable overlays to be visible in the decoded video stream; decoding the plurality of encoded image frames into a first plurality of image frames using a GOP structure; decoding the one or more encoded overlay image frames into one or more overlay image frames, wherein each overlay image frame having a same size as an image frame of the first plurality of image frames; upon determining that an image frame of the first plurality of image frames is associated with an overlay frame of the one or more overlay image frames: extracting second metadata from the header of the image frame, the second metadata comprises, for each toggleable overlay of the plurality of toggleable overlays: position data identifying a position of the toggleable overlay in the overlay frame, size data identifying a size of the toggleable overlay in the overlay frame, and identification data corresponding to an identifier of the toggleable overlay; upon the first metadata comprising an identifier of a toggleable overlay of the plurality of overlays, determining an image frame with overlays by including image data from the image frame and image data from overlay frame corresponding to the toggleable overlay using the position data and size data from the second metadata, and including the image frame with overlays in the decoded video stream.

According to a sixth aspect of the invention, the above object is achieved by a non-transitory computer-readable storage medium having stored thereon instructions for implementing the method according to the fourth aspect when executed on a device having processing capabilities.

The fifth and sixth aspects may generally have the same features and advantages as the fourth aspect.

It is further noted that the disclosure relates to all possible combinations of features unless explicitly stated otherwise.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Figure 1 shows an image frame including overlays according to embodiments;
Figure 2 shows a representation of an image container comprising a header, image frame data and overlay image frame data as auxiliary data, according to embodiments;
Figure 3 shows an encoding scheme of image frames and overlay image frames according to first embodiments;
Figure 4 shows a first image container comprising a header and image frame data, the first image container being associated with a second image container comprising the overlay image frame data, according to embodiments;
Figure 5 shows an encoding scheme of image frames and overlay image frames according to second embodiments;
Figure 6 shows an encoding scheme of image frames and overlay image frames according to third embodiments;
Figure 7 shows a flow chart of a method of encoding one or more video streams, according to embodiments;
Figure 8 shows a flow chart of a method of decoding a video stream, according to embodiments.

### Detailed Description

In monitoring applications, overlays such as bounding boxes, privacy masks, and text overlays indicating date and time may offer significant enhancements. Bounding boxes may be beneficial in monitoring applications for tracking and highlighting the movement of objects or individuals within a camera's field of view, aiding in real-time security analysis. Privacy masks may be advantageous for obscuring sensitive areas or maintaining the anonymity of individuals, ensuring compliance with privacy laws and ethical standards. Text overlays displaying date and time may be beneficial for contextualizing footage, making it easier to catalogue and reference specific events during review and investigation. These overlays, as well as other suitable overlays, may not only enhance the functionality of monitoring systems but may also contribute to more effective and responsible monitoring practices.

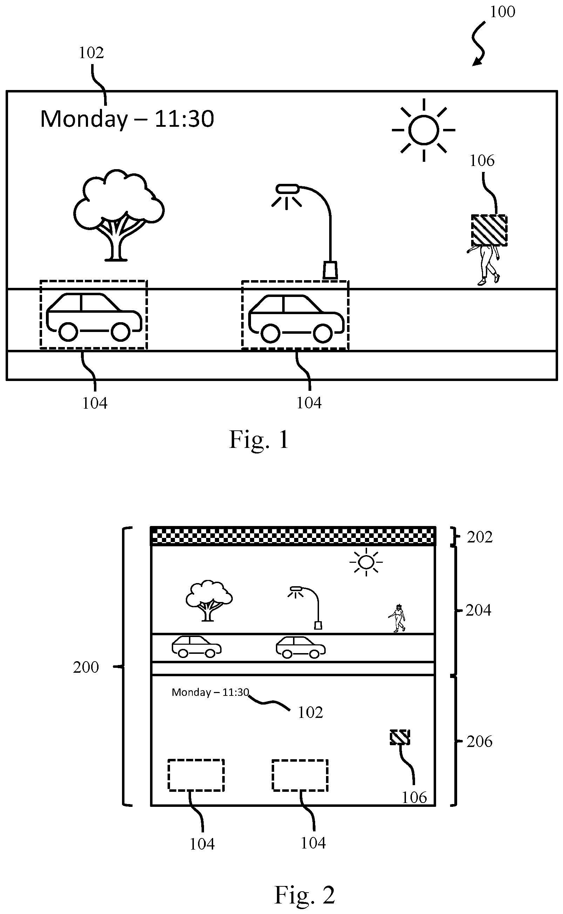

Figure 1 shows by way of example an image frame 100 depicting a scene. The image frame 100 comprising a plurality of overlays 102, 104, 106. The plurality of overlays in this example comprises two bounding box overlay each including a respective bounding box 104, indicating a location and size of a respective vehicle in scene. The plurality of overlays further comprises a text overlay 102, indicating capturing time of the image frame 100. The plurality of overlays further comprises a privacy mask overlay 106, obscuring the identity of a pedestrian in the scene.

The ability to individually toggle these overlays on and off provides additional flexibility and control in monitoring situations. For instance, security personnel may choose to activate bounding boxes during high-alert scenarios for enhanced tracking, while disabling them during normal operations to reduce screen clutter. Privacy masks can be enabled or disabled based on the viewer's security clearance level. A higher clearance level might allow an individual to view unmasked footage, revealing sensitive areas or information, while a lower clearance level would result in these areas being obscured. Date and time overlays might be turned off for a clearer view during live monitoring but enabled during playback for precise incident tracking. This customization allows monitoring systems to adapt to varying requirements, balancing the need for detailed information with clarity and simplicity of the video feed. It also enables users to focus on specific aspects of video data as needed, optimizing the utility and efficiency of the video processing system.

Implementing the ability to toggle overlays in a video encoding and decoding system introduces significant challenges, particularly in terms of synchronization and bandwidth management. Synchronization is critical to ensure that overlays accurately correspond to the relevant frames, and are correctly aligned, especially in live or rapidly changing video feeds. Any lag or misalignment between the overlays and the video frames can lead to confusion or misinterpretation. Additionally, managing bandwidth efficiently is crucial when implementing a solution including the possibility to individually toggle on and off a plurality of overlays, as the different possible configurations may significantly increase the data load. This is particularly important in systems where bandwidth limitations or streaming quality are concerns. Below, embodiments which may eliminate or reduce the above concerns in an encoder and decoder are discussed in conjunction with figures 2-8.

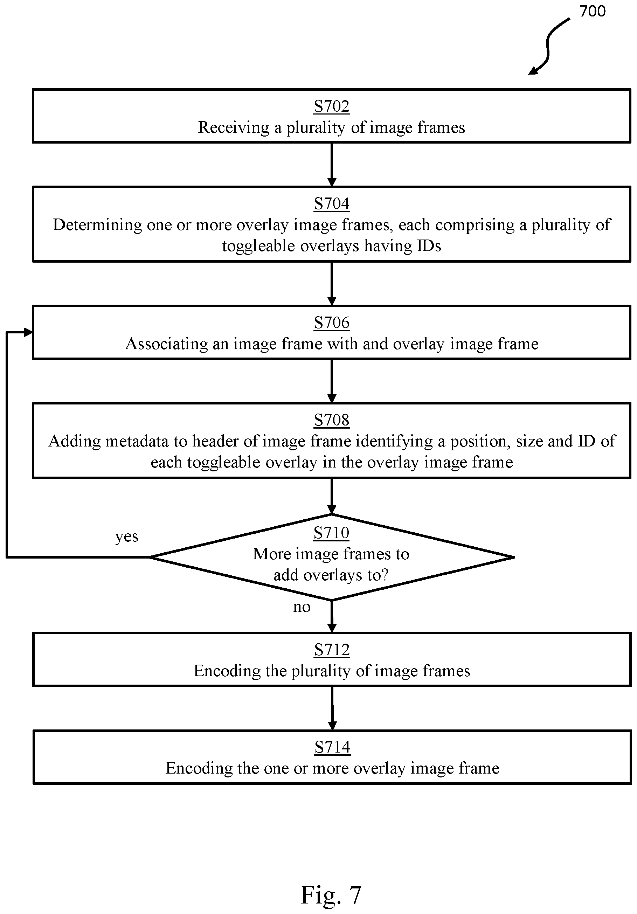

Figure 7 illustrates an example of method 700 for encoding one or more video streams. The method comprises receiving S702 a plurality of image frames. These image frames could be sourced from various origins. For instance, they might be captured directly from a video camera recording a scene, such as a monitoring camera monitoring a public space or a traffic camera overseeing a busy intersection. In some setups, the encoding device, or encoder, is integrated within the video camera itself, enabling immediate processing of the captured frames. Alternatively, in scenarios where the encoder and camera are separate units, the encoder might receive these frames wirelessly, utilizing streaming technologies for real-time or near-real-time encoding. Another possible source for these image frames is a memory storage, where previously recorded or archived video footage is stored, ready to be encoded.

The method 700 comprises determining S704 one or more overlay image frames, wherein each overlay image frame comprising a plurality of toggleable overlays. Some overlays of the overlay image frames may be determined by analysing the image frames and determining the overlays using analytics metadata. For example, the image frames may be analysed to detect objects in the image frames, and the overlays may be determined to include information about the objects, for example object type, bounding boxes, velocity, etc.

In addition to analytics-based overlays, some overlays might be determined by receiving status information from sensors located in or associated with the scene. These sensors can provide a range of data, like time and date, temperature readings in an industrial setting, open/close status of doors in a building, or even environmental conditions like smoke or gas levels. Incorporating this sensor data into overlays enriches the video stream with valuable contextual information, enhancing the overall understanding of the scene being monitored.

In some examples, the overlays of the overlay image frames are created by converting a received image file into an overlay, e.g., decoded from a JPEG, GIF or any other suitable image format.

Each overlay will be associated with an identifier to be used when referencing the overlay. The identifier can take various forms, depending on the system's requirements and the specific implementation strategy. One straightforward approach is using a counter that increments with each new overlay in the overlay image frame. For instance, the first overlay added to the overlay image frame be assigned an identifier of '1', the next one '2', and so on. Another approach could involve more complex identifiers, like a hash value calculated from the data of the overlay. This method provides a unique fingerprint for each overlay, derived from its visual content or size and position data, etc. For example, an overlay containing a bounding box around a vehicle could generate a specific hash value based on dimensions, position, and/or other characteristics of the bounding box. This kind of identifier facilitates more sophisticated management, such as quickly checking for duplicate overlays or retrieving specific overlays based on their visual content.

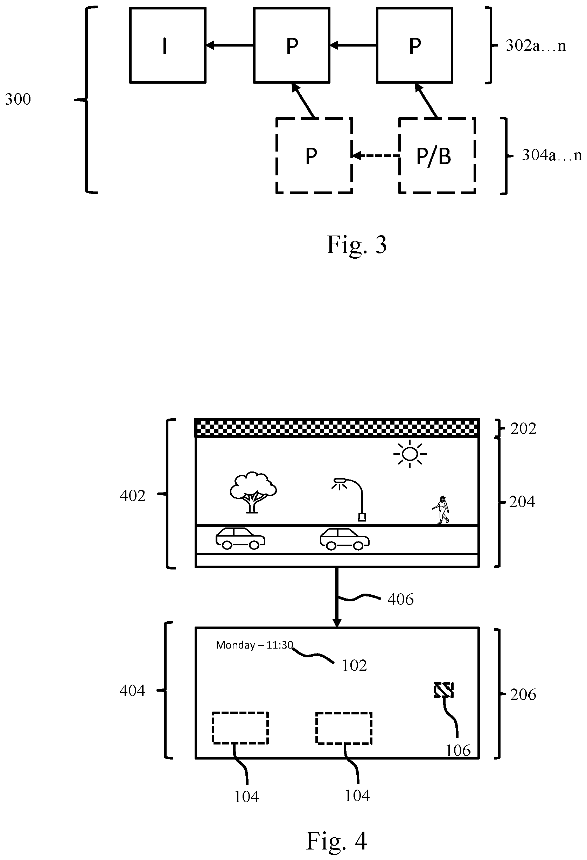

The method continues by, for at least some image frames of the plurality of image frames, associating S706 the image frame with an overlay image frame of the one or more overlay image frames. In some cases, all image frames are associated with a corresponding overlay image frame. In some cases, only image frames that will be delta-encoded are associated with an overlay image frame, as will be described in conjunction with figure 3 below. It should be noted that more than one image frame may be associated with a same overlay image frame, for example if the overlays of the overlay image frame does not change during a period of time of the captured video stream.

When an image frame has been associated with an overlay image frame, information about each of the plurality of overlays is added to the header of the image frame. The method 700 comprises adding S708 metadata to a header of the image frame, wherein the metadata comprises, for each toggleable overlay of the plurality of toggleable overlays: position data identifying a position of the toggleable overlay in the overlay image frame, size data identifying a size of the toggleable overlay in the overlay image frame, and identification data corresponding to the identifier of the toggleable overlay.

The method further comprises checking S710 if all image frames that should be associated with an overlay image frame have been processed. Otherwise, step S706 and S708 will be performed again for unprocessed image frames.

Figure 2 and 4 shows two different ways of associating an image frame to an overlay image frame and adding metadata to the header of the image frame.

Figure 2 shows by way of example a representation of an image container 200. The image container comprises data 202, 204, 206 for representing the image frame 100 from figure 1, to facilitate toggleable overlays 102, 104, 106. The image container 200 comprises image frame 204 corresponding to the image frame 100 from figure 1 without the overlays 102, 104, 106, i.e., image data depicting a scene. The image container further comprises auxiliary data 206 corresponding to an overlay image frame 206 having a same size as the image frame 204. The overlay image frame 206 comprises the plurality of toggleable overlays 102, 104, 106, positioned at a position in the overlay image frame 206 corresponding to the position in the image frame 204, such that overlaying the overlay image frame 206 on the image frame 204 would result in the image frame 100 from figure 1.

Each of the toggleable overlays 102, 104, 106 in figure 2 is associated with an identifier (not shown). The image container 200 further comprises a header 202. The header 202 comprises metadata (not shown) comprising, for each toggleable overlay 102, 104, 106 of the plurality of toggleable overlays: position data identifying a position of the toggleable overlay in the overlay image frame, size data identifying a size of the toggleable overlay in the overlay image frame, and identification data corresponding to the identifier of the toggleable overlay. For example, the header may comprise the following data, represented in a suitable way:

**Table 1**

| **ID** | **Position (x, y)** | **Size (x, y)** |
|---|---|---|
| 1 | 20,10 | 80,20 |
| 2 | 15, 150 | 60, 50 |
| 3 | 110, 150 | 60, 50 |
| 4 | 300, 100 | 20,20 |

In table 1, ID 1 corresponds to the text overlay 102, ID 2 corresponds to the left bounding box overlay 104, ID 3 corresponds to the right bounding box overlay 104, and ID 4 corresponds to the privacy mask overlay 106.

The header 202 may further comprise specific information to distinguish the overlay image frame data 206 from the main video content (the image frame 204). This could be in the form of identifiers or flags that mark the beginning and end of the overlay image frame data 206 and/or the image frame data 204 within the image container 200.

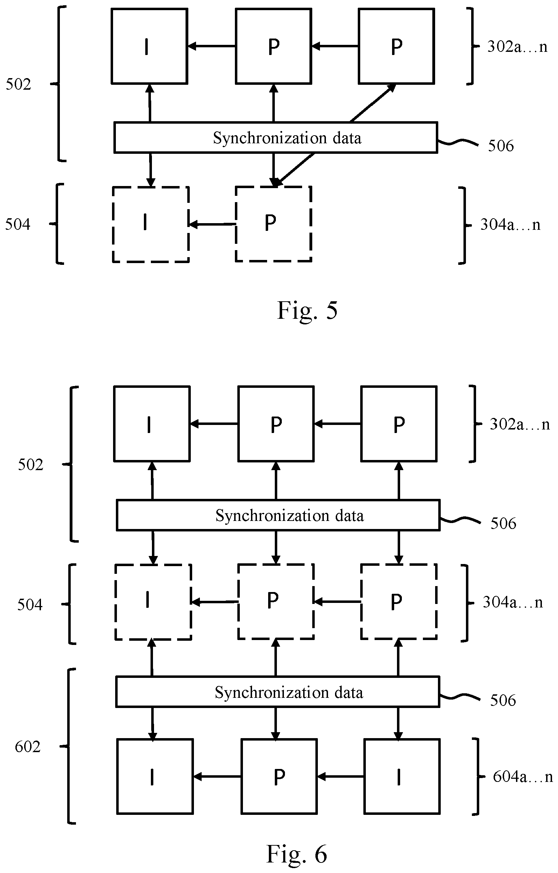

Figure 4 shows by way of example a representation of a first image container 402 and a second image container 404. In combination, the first image container 402 and a second image container 404 comprises data 202, 204, 206 for representing the image frame 100 from figure 1, to facilitate toggleable overlays 102, 104, 106. However, different from figure 2, in figure 4, the image frame 204 and the header 202 are provided in the first image container 402, while the overlay image frame 206 is provided in the second image container 404. However, the first image container 402 is associated 406 with the second image container 404. Such association 406 may be implemented in any suitable way, for example associating identifiers of the image containers 402, 404 in a suitable data structure, and examples will be described in conjunction with figure 5 and 6.

Returning to figure 7, when it is determined S710 that all image frames that should be associated with an overlay image frame have been processed, encoding the one or more video stream is performed. The encoding comprises encoding S712 the plurality of image frames into a first plurality of encoded image frames using a first group of picture, GOP, structure, and encoding S714 the one or more overlay image frames.

Figure 3, 5 and 6 shows by way of example encoding schemes for encoding the plurality of image frames and the one or more overlay image frames according to embodiments.

Figure 3 shows by way of example an encoding scheme of image frames and overlay image frames, for example represented as explained in figure 2. In figure 3, the encoding scheme results in a single video stream 300 corresponding both encoded image frames 302a...n and encoded overlay image frames 304a...n.

A plurality of image frames, e.g., including image frame 204 from figure 2, are encoded into a first plurality of encoded image frames 302a...n using a first group of picture, GOP, structure. The plurality of encoded image frames 302a...n are shown in figure 3 as squares with solid lines. Each image frame of the plurality of image frames is set as a no-display frame.

The one or more overlay image frames, e.g., including overlay image frame 206 from figure 2, are encoded into one or more encoded overlay image frames 304a...n. The one or more encoded overlay image frames are shown in figure 3 as squares with dashed lines. The overlay image frames are set as display frames.

In the embodiment of figure 3, for each delta-encoded image frame (denoted "P") of plurality of encoded image frames 302a... n, the overlay frame associated with the image frame being delta-encoded is determined, and encoded, using delta-frame encoding (PB frame encoding), into an encoded overlay frame referencing the delta-encoded image frame. The delta-frame encoding comprises setting each pixel-block of the encoded overlay frame not corresponding to any of the plurality of toggleable overlays to a skip-block. Using this technique, a legacy decoder, which do not implement the functionality of reading the header to understand which parts of the overlay image frame that relates to which overlay, may anyway provide a decoded image frame including all of the plurality of overlays.

In some embodiment, delta-encoding the overlay image frame includes only using the delta-encoded image frame as reference, i.e., encoding the overlay image frame as P-frame. In some examples, delta-encoding the overlay image frame may also comprise referencing an earlier encoded overlay image frame, as indicated in figure 3 for the rightmost (latest) encoded overlay image frame. Using previous encoded overlay image frames as reference may increase compression, in particular for static overlays.

In the embodiment of figure 3, each encoded overlay frame 304a...n is included in the first video stream as auxiliary data associated with the delta-encoded image frame which it references. For example, same image container may be used for both the encoded image frame data and the encoded overlay image frame data, as described in conjunction with figure 2. The header 202 of the image containers described in figure 2 may comprise reference frame data that indicates the specific frames from which the changes for the overlay image frames 304a...n are calculated.

In some examples, the encoded image frames 302a...n and encoded overlay image frames 304a...n are provided in separate video streams. Figure 5 shows such an embodiment.

In figure 5, the plurality of encoded image frames 302a...n are included in a first video stream 502 and the encoded one or more overlay frames 304a..n are included in a second video stream 504. In this embodiment, the step of associating the image frame with an overlay image frame of the one or more overlay image frames comprises including synchronization data 506 in the first video stream 502 to associate the image frame with an overlay image frame of the one or more overlay image frames. The synchronization data 506 may comprise any suitable data structure. One method is the use of timestamps. Each image frame and its corresponding overlay frame can be tagged with a timestamp, indicating the exact time at which they should be displayed. This ensures that during playback, the overlay is synchronized with the correct frame in the video stream. Another approach is using frame counters. Each frame in both the video and overlay streams can be assigned a sequential number. The decoder uses these numbers to match the overlay frame to the corresponding video frame. Metadata tags within the video stream 502 can be used to transmit the synchronization data 506. These tags may contain information that reference specific overlay image frames, such as unique identifiers or pointers.

The synchronization data may be divided into separate chunks of data, e.g., one portion of the synchronization data 506 may be included in the first video stream 502 after or in conjunction with each of the encoded image frames 302a...n. In other examples, a synchronization data 506 may be included in the first video stream in conjunction with each GOP of encoded image frames 302a...n.

As shown in figure 5, in examples, one encoded overlay image frame 304a...n may be associated with more than one encoded image frame 302a...n. In other examples, a 1-1 correspondence between the encoded overlay image frames 302a...n and the encoded image frames 304a...n is implemented. The overlay image frames may be encoded using a GOP differing from the GOP used when encoding the plurality of image frames into the plurality of encoded image frames 302a...n. In some examples, a new encoded overlay image frame 304a...n is only encoded upon a change among one of the plurality of overlays in the overlay image frames is being detected.

Separating the video streams for encoded image frames and encoded overlay image frames offers significant flexibility and efficiency, particularly when sharing overlay image frames across different video streams. This approach allows the same set of overlays to be used with multiple streams of video content, each possibly encoded differently based on specific requirements or constraints. For example, it may be advantageous to encode the plurality of image frames into several video streams, encoding of the plurality of image frames into the first plurality of encoded image frames differs from the encoding of the plurality of image frames into the second plurality of encoded image frames in at least one of: encoding quality, frame rate, GOP structure, codec, or resolution.

For instance, consider a scenario where the same video footage needs to be broadcast in two different formats: one stream is high-definition for high-bandwidth environments, while the other is lower-resolution for bandwidth-limited situations. The high-definition stream might have a higher encoding quality, frame rate, and resolution, whereas the lower-resolution stream is optimized for reduced data consumption. By having the overlay image frames in a separate stream, these overlays can be applied to both video streams without needing to be re-encoded for each one. This not only saves on encoding time and resources but also ensures consistency in the overlay content across different versions of the video.

Moreover, this separation allows for greater flexibility in modifying the video streams independently. For example, if there's a need to change the codec or GOP structure of one video stream for compatibility with certain playback systems, this can be done without affecting the overlay stream or other video streams. It also facilitates dynamic adaptation of the video stream to varying network conditions or device capabilities, as the overlay stream remains constant and compatible across these changes.

Figure 6 shows such an example. Here, encoding the plurality of image frames into a second plurality of encoded image frames 604a... n using a third GOP structure. The third GOP structure indicated in figure 6 are different from the (first) GOP structure used for encoding the encoding the plurality of image frames into the first plurality of encoded image frames 302a...n, but this is just by way of example. In other examples, the two GOP structures are the same.

In figure 6, the same synchronization data 506 is included in both the first video stream 502 and the third video stream 602. However, in some examples, the synchronization data included in the third video stream may be adjusted based on the differences in encoding the plurality of image frames into the first plurality of encoded image frames 302a...n and encoding the plurality of image frames into the second plurality of encoded image frames 604a...n. For example, if the lower-resolution stream (e.g., video stream 602) has a lower frame rate, the synchronization data (like timestamps or frame counters) included in that video stream 602 may need to account for the reduced number of frames. This might involve adjusting the timestamps or frame counters to align with the decreased frame rate.

In examples, encoding one or more overlay image frames comprises using a scalable video coding, SVC, codec. Using SVC to encode overlay image frames is a strategic approach, especially when dealing with multiple streams 502, 602 of video data that are encoded at different resolutions. SVC is an extension of the H.264/AVC standard and is designed to provide video streams that can be easily adapted to varying bandwidths and display resolutions. When encoding overlay image frames using SVC, it allows for these overlays to be adapted to different resolutions of the video streams 502, 602. For example, if there are two streams, one in high definition and the other in standard definition, the SVC-encoded overlay image frame can be applied to both streams 502, 602 appropriately. The overlays will align correctly with the resolution of each stream 502, 602, ensuring that it appears consistently and clearly, regardless of the underlying video resolution.

It should be noted that, in some embodiments, the strategy of sharing overlay image frames across different video streams may be applied to video streams originating from different sets of images as well. For example, for certain types of overlays, e.g., relating to date and time or other general metadata relating to the scene captured by the different sets of images (i.e., one set from a first camera, and a second set from a second camera), the overlays may be shared between video streams originating from different sets of images. In these examples, the method described in figure 7 may be amended to further include: receiving a second plurality of image frames; for each image frame among at least some of the second plurality of image frames: associating the image frame with an overlay image frame of the one or more overlay image frames; adding metadata to a header of the image frame, wherein the metadata comprises, for each toggleable graphical overlay of the plurality of toggleable graphical overlays: position data identifying a position of the toggleable graphical overlay in the overlay image frame, size data identifying a size of the toggleable graphical overlay in the overlay image frame, and identification data corresponding to the identifier of the toggleable graphical overlay. The encoding may then comprises encoding the second plurality of image frames into a second plurality of encoded image frames using a third GOP structure and including the second plurality of encoded image frames in a third video stream. The step of associating the image frame of the second plurality of image frames with an overlay image frame of the one or more overlay image frames may then comprise: including second synchronization data in the third video stream to associate the image frame of the second plurality of image with an encoded overlay image frame of the one or more encoded overlay image frames.

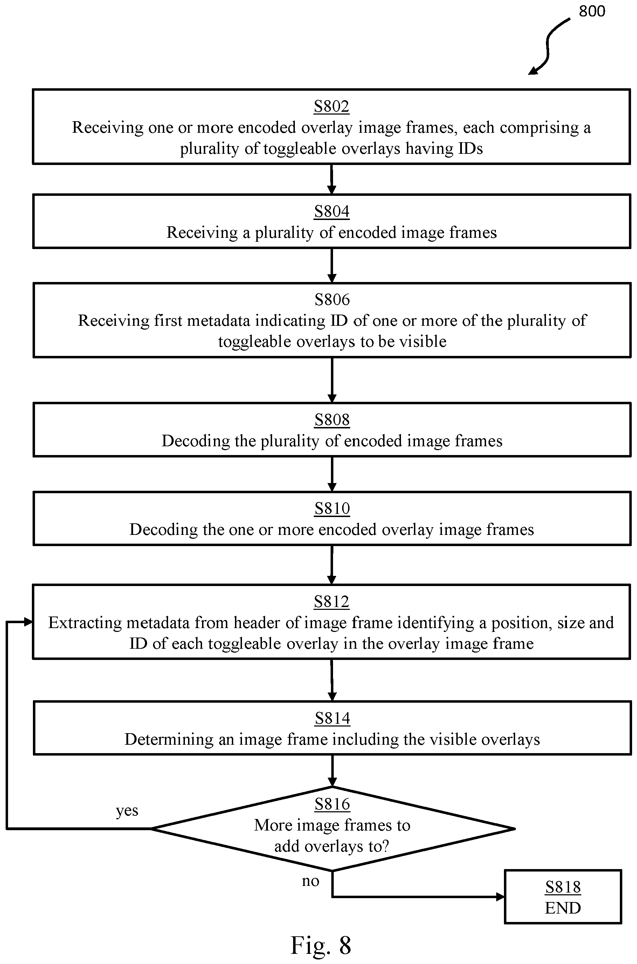

Figure 8 describe a decoding method 800, for decoding video stream(s) encoded as described herein.

The method 800 comprises receiving S802 one or more encoded overlay image frames, each encoded overlay image frame comprising a plurality of toggleable overlays, each toggleable overlay being associated with an identifier.

The method 800 further comprises receiving S804 a plurality of encoded image frames in a first encoded video stream and receiving S806 first metadata indicating identifiers of one or more of the plurality of toggleable overlays to be visible in the decoded video stream. Such metadata may be received from a user of a device displaying the decoded video stream, for example.

The method 800 further comprises decoding S808 the plurality of encoded image frames into a first plurality of image frames using a GOP structure. The method 800 further comprises decoding S808 the one or more encoded overlay image frames into one or more overlay image frames, wherein each overlay image frame having a same size as an image frame of the first plurality of image frames.

The method 800 further comprises, decoding S810 the one or more encoded overlay image frames.

Specifically, the decoding S810 comprises, upon determining that an image frame of the first plurality of image frames is associated with an overlay frame of the one or more overlay image frames:
1) Extracting S812 second metadata from the header of the image frame, the second metadata comprises, for each toggleable overlay of the plurality of toggleable overlays: position data identifying a position of the toggleable overlay in the overlay frame, size data identifying a size of the toggleable overlay in the overlay frame, and identification data corresponding to an identifier of the toggleable overlay;
2) upon the first metadata comprising an identifier of a toggleable overlay of the plurality of overlays, determining S814 an image frame with overlays by including image data from the image frame and image data from overlay frame corresponding to the toggleable overlay using the position data and size data from the second metadata, and including the image frame with overlays in the decoded video stream.

The steps S812 and S814 are performed as long as it is determined S816 that there exist more image frames among the plurality of decoded image frames to add overlays for, i.e., more image frames of the first plurality of image frames that is associated with an overlay frame of the one or more overlay image frames.

As described above in conjunction with figures 3 and 5-6, the plurality of encoded image frames and the one or more encoded overlay image frames may be received by the decoder in a same video stream or in different video streams. In the embodiment of receiving a single video stream, the step S804 of receiving one or more encoded overlay image frames may comprise receiving a plurality of delta-encoded overlay frames, each delta-encoded overlay frame associated with an encoded image frame of the plurality of encoded image frames, wherein each pixel block of the delta-encoded overlay frames not comprising image data of any of the plurality of toggleable overlays is set as a skip-block. Moreover, each of the plurality of decoded image frames is a no-display frame as defined by the encoder, see above.

In the 1-stream embodiment, in which each delta-encoded overlay image frame is included as auxiliary data in the encoded video stream, the step of determining S814 an image frame with overlays comprises delta-frame decoding an overlay image frame associated with the image frame using the image frame as reference. During the delta-frame decoding, upon the overlay data not comprising an identifier of a toggleable overlay of the plurality of overlays, setting pixel blocks corresponding to the toggleable overlay as skip-blocks using the position data and size data from the second metadata. Consequently, the decoded overlay image frame will comprise both the one or more overlays that should be visible according to the first metadata, as well as the image data from the referenced image frame. The decoded overlay image frame is a display frame as defined by the encoder, see above.

In the 2-stream embodiment, the one or more encoded overlay image frames are received in a second encoded video stream different from the first encoded video stream, wherein the first encoded video stream comprises synchronization data indicating association of each overlay image frame of the one or more overlay image frames with an image frame of the first plurality of image frames. In this embodiment, the step of determining S814 an image frame with overlays comprises:
1) extracting first image data from overlay frame corresponding to the toggleable overlay;
2) identifying second image data in the image frame to be replaced by the first image data using the position data and size data from the second metadata; and
3) determining the image frame with overlays by replacing the second pixel blocks with the first pixel blocks in the image frame.

In the two stream embodiment, similar to the 1-stream embodiment, the decoded image frames are set to no-display, and the image frames with overlay are set to be displayed.

As described above in conjunction with figure 6, the 2-stream embodiment may be amended to define a X-stream embodiment, wherein X>2. The above description of decoding the 2-stream embodiment may then be applied *mutatis mutandis.*

An encoder implementing an encoding method as described herein (and similarly a decoder) may in examples be implemented in a single device. The encoder may for example be implemented in a video camera. In other examples, some of the encoding/decoding functionality may be implemented in a server or in the cloud or in separate devices. Generally, the devices (camera, server, etc.,) implementing the encoding/decoding methods described herein may comprise circuitry which is configured to implement the encoding/decoding functionality described herein. The described functionality can be implemented advantageously in one or more computer programs that are executable on a programmable system including at least one programmable processor coupled to receive data and instructions from, and to transmit data and instructions to, a data storage system, at least one input device such as a camera, and at least one output device such as a display. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

The above embodiments are to be understood as illustrative examples of the invention. Further embodiments of the invention are envisaged. For example, the image frames capturing the scene may comprise 2D data or 3D data. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of encoding one or more video streams, the method comprising the steps of:
receiving a plurality of image frames;
determining one or more overlay image frames, each overlay image frame comprising a plurality of toggleable overlays, each toggleable overlay being associated with an identifier, wherein the overlay image frame having a same size as an image frame of the plurality of image frames;
for each image frame among at least some of the plurality of image frames:
associating the image frame with an overlay image frame of the one or more overlay image frames;
adding metadata to a header of the image frame, wherein the metadata comprises, for each toggleable overlay of the plurality of toggleable overlays: position data identifying a position of the toggleable overlay in the overlay image frame, size data identifying a size of the toggleable overlay in the overlay image frame, and identification data corresponding to the identifier of the toggleable overlay;
encoding the one or more video stream, wherein the encoding comprises:
encoding the plurality of image frames into a first plurality of encoded image frames using a first group of picture, GOP, structure;
encoding the one or more overlay image frames.

2. The method of claim 1, wherein the encoded image frames and the encoded overlay frames are included in a first video stream, wherein the method further comprises setting each image frame of the plurality of image frames as a no-display frame; wherein the encoding comprises:
using a block-based codec supporting skip-blocks;
for each delta-encoded image frame of the first plurality of encoded image frames:
determining an overlay image frame among the one or more overlay image frames;
setting the overlay image frame as a display frame;
delta-frame encoding the overlay image frame into an encoded overlay frame referencing the delta-encoded image frame, wherein each pixel block of the encoded overlay frame not corresponding to any of the plurality of toggleable overlays is set as a skip-block; and
including the encoded overlay frame in the first video stream as auxiliary data associated with the delta-encoded image frame.

3. The method of claim 1, wherein the first plurality of encoded image frames are included in a first video stream and the encoded one or more overlay frames are included in a second video stream, wherein the step of associating the image frame with an overlay image frame of the one or more overlay image frames comprises:
including synchronization data in the first video stream to associate the image frame with an overlay image frame of the one or more overlay image frames.

4. The method of claim 3, wherein the step of encoding one or more overlay image frames comprises using a second GOP structure different from the first GOP structure.

5. The method of any one of claims 3-4, further comprising the steps of:
encoding the plurality of image frames into a second plurality of encoded image frames using a third GOP structure;
including the second plurality of encoded image frames in a third video stream; and
including the synchronization data in the third video stream.

6. The method of claim 5, wherein the encoding of the plurality of image frames into the first plurality of encoded image frames differs from the encoding of the plurality of image frames into the second plurality of encoded image frames in at least one of:
encoding quality, frame rate, GOP structure, codec, or resolution.

7. The method of claim 6, wherein the step of encoding one or more overlay image frames comprises using a scalable video coding, SVC, codec.

8. A system for encoding one or more video streams, the system comprising:
one or more processors; and
one or more non-transitory computer-readable media storing instructions executable by the one or more processors, wherein the instructions, when executed, cause the system to perform operations comprising:
receiving a plurality of image frames;
determining one or more overlay image frames, each overlay image frame comprising a plurality of toggleable overlays, each toggleable overlay being associated with an identifier, wherein the overlay image frame having a same size as an image frame of the plurality of image frames;
for each image frame among at least some of the plurality of image frames:
associating the image frame with an overlay image frame of the one or more overlay image frames;
adding metadata to a header of image frame, wherein the metadata comprises, for each toggleable overlay of the plurality of toggleable overlays: position data identifying a position of the toggleable overlay in the overlay image frame, size data identifying a size of the toggleable overlay in the overlay image frame, and identification data corresponding to the identifier of the toggleable overlay;
encoding the one or more video stream, wherein the encoding comprises:
encoding the plurality of image frames into a first plurality of encoded image frames using a first group of picture, GOP, structure;
encoding the one or more overlay image frames.

9. A non-transitory computer-readable storage medium having stored thereon instructions for implementing the method according to any one of claims 1-7 when executed on one or more devices having processing capabilities.

10. A method of decoding a video stream, comprising the steps of:
receiving one or more encoded overlay image frames, each encoded overlay image frame comprising a plurality of toggleable overlays, each toggleable overlay being associated with an identifier;
receiving a plurality of encoded image frames in a first encoded video stream;
receiving first metadata indicating identifiers of one or more of the plurality of toggleable overlays to be visible in the decoded video stream;
decoding the plurality of encoded image frames into a first plurality of image frames using a GOP structure;
decoding the one or more encoded overlay image frames into one or more overlay image frames, wherein each overlay image frame having a same size as an image frame of the first plurality of image frames;
upon determining that an image frame of the first plurality of image frames is associated with an overlay frame of the one or more overlay image frames:
extracting second metadata from the header of the image frame, the second metadata comprises, for each toggleable overlay of the plurality of toggleable overlays: position data identifying a position of the toggleable overlay in the overlay frame, size data identifying a size of the toggleable overlay in the overlay frame, and identification data corresponding to an identifier of the toggleable overlay;
upon the first metadata comprising an identifier of a toggleable overlay of the plurality of overlays, determining an image frame with overlays by including image data from the image frame and image data from overlay frame corresponding to the toggleable overlay using the position data and size data from the second metadata, and including the image frame with overlays in the decoded video stream.

11. The method of claim 10, wherein the step of receiving one or more encoded overlay image frames comprises:
receiving a plurality of delta-encoded overlay frames, each delta-encoded overlay frame associated with an encoded image frame of the plurality of encoded image frames, wherein each pixel block of the delta-encoded overlay frames not comprising image data of any of the plurality of toggleable overlays is set as a skip-block;
wherein the step of determining an image frame with overlays comprises: delta-frame decoding an overlay image frame associated with the image frame using the image frame as reference, wherein the delta-frame decoding comprises, upon the first metadata not comprising an identifier of a toggleable overlay of the plurality of overlays, setting pixel blocks corresponding to the toggleable overlay as skip-blocks using the position data and size data from the second metadata; wherein the image frame with overlays is a display frame; and
wherein each delta-encoded overlay image frame is included as auxiliary data in the first encoded video stream, wherein each image frame of the plurality of image frames is a no-display frame.

12. The method of claim 10, wherein the one or more encoded overlay image frames are received in a second encoded video stream different from the first encoded video stream, wherein the first encoded video stream comprises synchronization data indicating association of each overlay image frame of the one or more overlay image frames with an image frame of the first plurality of image frames.

13. The method of claim 12, wherein the step of determining an image frame with overlays comprises:
extracting first image data from overlay frame corresponding to the toggleable overlay;
identifying second image data in the image frame to be replaced by the first image data using the position data and size data from the second metadata; and
determining the image frame with overlays by replacing the second pixel blocks with the first pixel blocks in the image frame.

14. A system decoding a video stream, the system comprising:
one or more processors; and
one or more non-transitory computer-readable media storing instructions executable by the one or more processors, wherein the instructions, when executed, cause the system to perform operations comprising:
receiving one or more encoded overlay image frames, each encoded overlay image frame comprising a plurality of toggleable overlays, each toggleable overlay being associated with an identifier;
receiving a plurality of encoded image frames in a first encoded video stream;
receiving first metadata indicating identifiers of one or more of the plurality of toggleable overlays to be visible in the decoded video stream;
decoding the plurality of encoded image frames into a first plurality of image frames using a GOP structure;
decoding the one or more encoded overlay image frames into one or more overlay image frames, wherein each overlay image frame having a same size as an image frame of the first plurality of image frames;
upon determining that an image frame of the first plurality of image frames is associated with an overlay frame of the one or more overlay image frames:
extracting second metadata from the header of the image frame, the second metadata comprises, for each toggleable overlay of the plurality of toggleable overlays: position data identifying a position of the toggleable overlay in the overlay frame, size data identifying a size of the toggleable overlay in the overlay frame, and identification data corresponding to an identifier of the toggleable overlay;
upon the first metadata comprising an identifier of a toggleable overlay of the plurality of overlays, determining an image frame with overlays by including image data from the image frame and image data from overlay frame corresponding to the toggleable overlay using the position data and size data from the second metadata, and including the image frame with overlays in the decoded video stream.

15. A non-transitory computer-readable storage medium having stored thereon instructions for implementing the method according to any one of claims 10-13 when executed on one or more devices having processing capabilities.

## Amended claims

### Amended claims in accordance with Rule 137(2) EPC.

1. A method of encoding one or more video streams, the method comprising the steps of:
receiving a plurality of image frames;
determining one or more overlay image frames, each overlay image frame comprising a plurality of separately toggleable overlays, each toggleable overlay being associated with an identifier, wherein the overlay image frame having a same size as an image frame of the plurality of image frames;
for each image frame among at least some of the plurality of image frames:
associating the image frame with an overlay image frame of the one or more overlay image frames;
adding metadata to a header of the image frame, wherein the metadata comprises, for each toggleable overlay of the plurality of toggleable overlays:
position data identifying a position of the toggleable overlay in the overlay image frame, size data identifying a size of the toggleable overlay in the overlay image frame, and identification data corresponding to the identifier of the toggleable overlay;
encoding the one or more video stream, wherein the encoding comprises:
encoding the plurality of image frames into a first plurality of encoded image frames using a first group of picture, GOP, structure;
encoding the one or more overlay image frames.

2. The method of claim 1, wherein the encoded image frames and the encoded overlay frames are included in a first video stream, wherein the method further comprises setting each image frame of the plurality of image frames as a no-display frame; wherein the encoding comprises:
using a block-based codec supporting skip-blocks;
for each delta-encoded image frame of the first plurality of encoded image frames:
determining an overlay image frame among the one or more overlay image frames;
setting the overlay image frame as a display frame;
delta-frame encoding the overlay image frame into an encoded overlay frame referencing the delta-encoded image frame, wherein each pixel block of the encoded overlay frame not corresponding to any of the plurality of toggleable overlays is set as a skip-block; and
including the encoded overlay frame in the first video stream as auxiliary data associated with the delta-encoded image frame.

3. The method of claim 1, wherein the first plurality of encoded image frames are included in a first video stream and the encoded one or more overlay frames are included in a second video stream, wherein the step of associating the image frame with an overlay image frame of the one or more overlay image frames comprises:
including synchronization data in the first video stream to associate the image frame with an overlay image frame of the one or more overlay image frames.

4. The method of claim 3, wherein the step of encoding one or more overlay image frames comprises using a second GOP structure different from the first GOP structure.

5. The method of any one of claims 3-4, further comprising the steps of:
encoding the plurality of image frames into a second plurality of encoded image frames using a third GOP structure;
including the second plurality of encoded image frames in a third video stream; and
including the synchronization data in the third video stream.

6. The method of claim 5, wherein the encoding of the plurality of image frames into the first plurality of encoded image frames differs from the encoding of the plurality of image frames into the second plurality of encoded image frames in at least one of:
encoding quality, frame rate, GOP structure, codec, or resolution.

7. The method of claim 6, wherein the step of encoding one or more overlay image frames comprises using a scalable video coding, SVC, codec.

8. A system for encoding one or more video streams, the system comprising:
one or more processors; and
one or more non-transitory computer-readable media storing instructions executable by the one or more processors, wherein the instructions, when executed, cause the system to perform operations comprising:
receiving a plurality of image frames;
determining one or more overlay image frames, each overlay image frame comprising a plurality of separately toggleable overlays, each toggleable overlay being associated with an identifier, wherein the overlay image frame having a same size as an image frame of the plurality of image frames;
for each image frame among at least some of the plurality of image frames:
associating the image frame with an overlay image frame of the one or more overlay image frames;
adding metadata to a header of image frame, wherein the metadata comprises, for each toggleable overlay of the plurality of toggleable overlays:
position data identifying a position of the toggleable overlay in the overlay image frame, size data identifying a size of the toggleable overlay in the overlay image frame, and identification data corresponding to the identifier of the toggleable overlay;
encoding the one or more video stream, wherein the encoding comprises:
encoding the plurality of image frames into a first plurality of encoded image frames using a first group of picture, GOP, structure;
encoding the one or more overlay image frames.

9. A non-transitory computer-readable storage medium having stored thereon instructions for implementing the method according to any one of claims 1-7 when executed on one or more devices having processing capabilities.

10. A method of decoding a video stream, comprising the steps of:
receiving one or more encoded overlay image frames, each encoded overlay image frame comprising a plurality of separately toggleable overlays, each toggleable overlay being associated with an identifier;
receiving a plurality of encoded image frames in a first encoded video stream;
receiving first metadata indicating identifiers of one or more of the plurality of toggleable overlays to be visible in the decoded video stream;
decoding the plurality of encoded image frames into a first plurality of image frames using a GOP structure;
decoding the one or more encoded overlay image frames into one or more overlay image frames, wherein each overlay image frame having a same size as an image frame of the first plurality of image frames;
upon determining that an image frame of the first plurality of image frames is associated with an overlay frame of the one or more overlay image frames:
extracting second metadata from the header of the image frame, the second metadata comprises, for each toggleable overlay of the plurality of toggleable overlays: position data identifying a position of the toggleable overlay in the overlay frame, size data identifying a size of the toggleable overlay in the overlay frame, and identification data corresponding to an identifier of the toggleable overlay;
upon the first metadata comprising an identifier of a toggleable overlay of the plurality of overlays, determining an image frame with overlays by including image data from the image frame and image data from overlay frame corresponding to the toggleable overlay using the position data and size data from the second metadata, and including the image frame with overlays in the decoded video stream.

11. The method of claim 10, wherein the step of receiving one or more encoded overlay image frames comprises:
receiving a plurality of delta-encoded overlay frames, each delta-encoded overlay frame associated with an encoded image frame of the plurality of encoded image frames, wherein each pixel block of the delta-encoded overlay frames not comprising image data of any of the plurality of toggleable overlays is set as a skip-block;
wherein the step of determining an image frame with overlays comprises:
delta-frame decoding an overlay image frame associated with the image frame using the image frame as reference, wherein the delta-frame decoding comprises, upon the first metadata not comprising an identifier of a toggleable overlay of the plurality of overlays, setting pixel blocks corresponding to the toggleable overlay as skip-blocks using the position data and size data from the second metadata; wherein the image frame with overlays is a display frame; and
wherein each delta-encoded overlay image frame is included as auxiliary data in the first encoded video stream, wherein each image frame of the plurality of image frames is a no-display frame.

12. The method of claim 10, wherein the one or more encoded overlay image frames are received in a second encoded video stream different from the first encoded video stream, wherein the first encoded video stream comprises synchronization data indicating association of each overlay image frame of the one or more overlay image frames with an image frame of the first plurality of image frames.

13. The method of claim 12, wherein the step of determining an image frame with overlays comprises:
extracting first image data from overlay frame corresponding to the toggleable overlay;
identifying second image data in the image frame to be replaced by the first image data using the position data and size data from the second metadata; and
determining the image frame with overlays by replacing the second pixel blocks with the first pixel blocks in the image frame.

14. A system decoding a video stream, the system comprising:
one or more processors; and
one or more non-transitory computer-readable media storing instructions executable by the one or more processors, wherein the instructions, when executed, cause the system to perform operations comprising:
receiving one or more encoded overlay image frames, each encoded overlay image frame comprising a plurality of separately toggleable overlays, each toggleable overlay being associated with an identifier;
receiving a plurality of encoded image frames in a first encoded video stream;
receiving first metadata indicating identifiers of one or more of the plurality of toggleable overlays to be visible in the decoded video stream;
decoding the plurality of encoded image frames into a first plurality of image frames using a GOP structure;
decoding the one or more encoded overlay image frames into one or more overlay image frames, wherein each overlay image frame having a same size as an image frame of the first plurality of image frames;
upon determining that an image frame of the first plurality of image frames is associated with an overlay frame of the one or more overlay image frames:
extracting second metadata from the header of the image frame, the second metadata comprises, for each toggleable overlay of the plurality of toggleable overlays: position data identifying a position of the toggleable overlay in the overlay frame, size data identifying a size of the toggleable overlay in the overlay frame, and identification data corresponding to an identifier of the toggleable overlay;
upon the first metadata comprising an identifier of a toggleable overlay of the plurality of overlays, determining an image frame with overlays by including image data from the image frame and image data from overlay frame corresponding to the toggleable overlay using the position data and size data from the second metadata, and including the image frame with overlays in the decoded video stream.

15. A non-transitory computer-readable storage medium having stored thereon instructions for implementing the method according to any one of claims 10-13 when executed on one or more devices having processing capabilities.
